(19) **Europäisches Patentamt / European Patent Office / Office européen des brevets**

(11) **EP 2 377 323 B1**

(12) **FASCICULE DE BREVET EUROPEEN**

(45) Date de publication et mention
de la délivrance du brevet:
**25.09.2019 Bulletin 2019/39**

(21) Numéro de dépôt: **09803870.6**

(22) Date de dépôt: **16.12.2009**

(51) Int Cl.:
*H04N 19/52* (2014.01)          *H04N 19/51* (2014.01)
*H04N 19/61* (2014.01)          *H04N 19/537* (2014.01)

(86) Numéro de dépôt international:
**PCT/FR2009/052560**

(87) Numéro de publication internationale:
**WO 2010/072946 (01.07.2010 Gazette 2010/26)**

(54) **PRÉDICTION D'IMAGES PAR REPARTIONNEMENT D'UNE PORTION DE ZONE CAUSALE DE RÉFÉRENCE, CODAGE ET DECODAGE UTILISANT UNE TELLE PRÉDICTION**

BILDPRÄDIKTION DURCH AUFTEILUNG VON KAUSALREGIONEN DER REFERENZ UND KODIERUNG EINER SOLCHEN PRÄDIKTION

IMAGE PREDICTION BY SUBDIVISION OF CAUSAL REGIONS OF REFERENCE AND CODING USING SUCH PREDICTION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.12.2008 FR 0858972**

(43) Date de publication de la demande:
**19.10.2011 Bulletin 2011/42**

(73) Titulaire: **Orange**
**75015 Paris (FR)**

(72) Inventeurs:
• **LAROCHE, Guillaume**
**F-35700 Rennes (FR)**
• **JUNG, Joël**
**F-78320 Le Mesnil Saint Denis (FR)**

(56) Documents cités:
**US-A1- 2001 026 590     US-A1- 2004 008 778**
**US-A1- 2006 256 852     US-A1- 2008 043 842**
**US-A1- 2008 107 181     US-A1- 2008 198 934**
**US-A1- 2008 253 457**

## Description

Arrière-plan de l'invention

La présente invention se rapporte de manière générale au domaine du traitement d'images, et plus précisément au codage et au décodage par compétition d'images numériques et de séquences d'images numériques.

Plusieurs procédés de codage et de décodage existent pour la transmission d'images. On distingue notamment des grands types de codage tels que le codage dit "intra" où une image est codée de manière autonome, c'est-à-dire sans référence à d'autres images, ou encore le codage dit "inter" qui consiste à coder une image courante par rapport à des images passées de manière à exprimer et ne transmettre que la différence entre ces images.

Les procédés de codage du type précité comprennent généralement une étape de codage prédictif selon laquelle des portions d'images, appelés blocs ou macroblocs, d'une image courante sont prédits par rapport à d'autres blocs ou macroblocs de référence, c'est-à-dire précédemment codés puis décodés.

Dans le cas par exemple de la norme H264/MPEG-4 AVC (d'après l'anglais "Advanced Video Coding"), le codage prédictif d'un macrobloc consiste à découper les macroblocs selon une pluralité de partitions ayant généralement la forme de blocs de plus petite taille.

Plus précisément, lors du codage prédictif d'un macrobloc conformément à la norme précitée, à l'exception d'un macrobloc de type 16x16, le macrobloc est généralement découpé selon une pluralité de partitions ayant généralement la forme de blocs de plus petite taille. La prédiction spatiale d'un tel macrobloc dans une image consiste à prédire chaque bloc de plus petite taille formant ce macrobloc par rapport à un ou plusieurs blocs d'un autre macrobloc de cette même image ayant déjà été codé puis décodé, un tel macrobloc étant appelé macrobloc de référence. Cette prédiction n'est possible que si le macrobloc de référence avoisine le macrobloc à prédire et se trouve dans certaines directions prédéterminées par rapport à celui-ci, c'est-à-dire généralement au dessus et à gauche, dans un voisinage dit "causal".

L'inconvénient d'un tel type de prédiction réside dans le fait que pour un débit de transmission donné du codeur vers le décodeur, il procure une moins bonne qualité vidéo que le codage en Inter puisqu'il ne tire pas partie des corrélations temporelles entre les images de la séquence.

Dans le cas du codage inter, le macrobloc courant à coder peut être partitionné selon les modes 16x16, 8x16, 16x8 et 8x8. Si le mode 8x8 est sélectionné, chaque bloc 8x8 est à nouveau partitionné selon les modes 8x8, 4x8, 8x4 et 4x4. Chaque bloc courant est comparé à un ou plusieurs blocs d'une zone causale de référence, de type spatiale ou temporelle, qui comprend des macroblocs déjà décodés au niveau du codeur lors du codage par ce dernier d'un macrobloc courant. Un prédicteur temporel est alors défini par un vecteur qui décrit le mouvement entre le bloc courant et le bloc de référence. La prédiction d'un vecteur de mouvement d'un bloc en utilisant les vecteurs de mouvement d'une zone de référence est bien connue. US 2008/253457 concerne un procédé de prédiction de vecteur mouvement d'une partition courante qui est conforme au standard H.264/AVC. Une telle prédiction est divulguée aussi par US 2008/198934, US 2001/026590, US 2006/256852, US 2008/043842, par exemple.

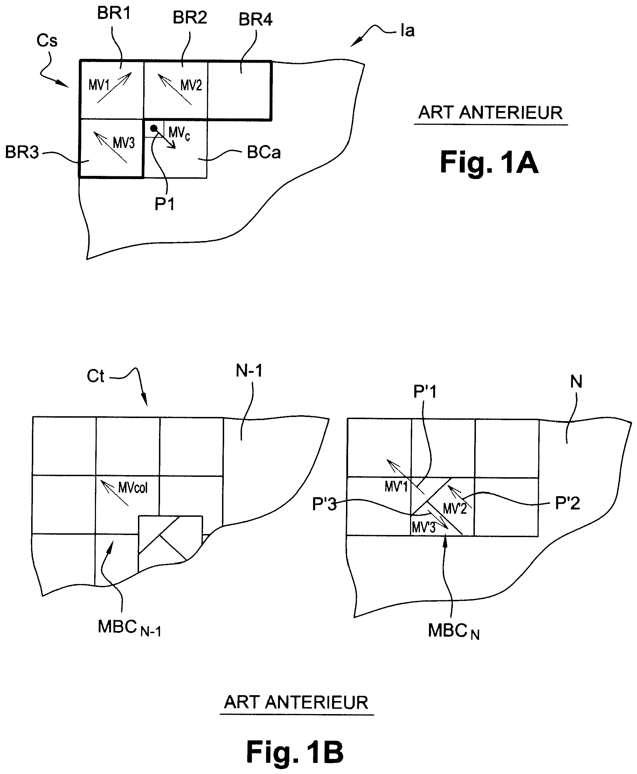

La figure 1A représente le cas d'une prédiction spatiale d'un vecteur MVc d'un bloc courant à coder en Inter, noté BCa, qui exploite les corrélations spatiales entre les différents macroblocs d'une même image Ia. Un tel bloc est découpé selon par exemple 16 partitions plus petites P1...P16, chacune de taille 4x4. Dans un souci de clarté de la figure, seule la partition P1 est représentée. Conformément à la norme H264/AVC, la partition P1 est prédite en référence à une zone causale de référence Cs, qui comprend quatre blocs chacun de taille 16x16, notés BR1, BR2, BR3 et BR4 sur la figure 1, ces derniers étant voisins de ladite partition P1. Plus précisément, il est procédé au calcul du vecteur mouvement MVc de la partition P1. Une méthode de prédiction consiste à calculer par exemple les vecteurs mouvement MV1, MV2 et MV3 correspondant respectivement aux macroblocs de référence BR1, BR2 et BR3, puis à calculer le médian des vecteurs MV1, MV2 et MV3 pour en déduire le vecteur mouvement qui sert à prédire le vecteur MVc de la partition P1 à coder.

Un inconvénient de la prédiction représentée à la figure 1A réside dans le fait que :

- la distance spatiale moyenne entre les pixels de la partition P1 courante à coder et les pixels des macroblocs BR1, BR2 et BR3 est relativement élevée,
- et que les vecteurs MV1, MV2 et MV3 ont été calculés relativement à des macroblocs de taille très différente de celle de la partition P1 courante à coder.

Il en résulte qu'une telle prédiction manque de précision.

La figure 1B représente maintenant le cas d'une prédiction temporelle d'un macrobloc courant à coder en Inter, noté $MBC_N$, qui appartient à une image N à coder. Une telle prédiction exploite les corrélations temporelles entre le macrobloc $MBC_N$ et le ou les macroblocs d'une pluralité d'images de référence déjà codées, puis décodées qui constituent une zone causale de référence temporelle. Dans l'exemple représenté, la zone causale de référence temporelle, notée Ct, comprend uniquement l'image précédente N-1. Dans d'autres exemples, la zone causale de référence pourrait comprendre, non seulement l'image N-1, mais également les images N-2, N-3, etc....Un tel macrobloc $MBC_N$ est découpé selon par exemple trois partitions plus petites P'1, P'2, P'3, qui sont, dans l'exemple représenté, de forme géométrique quelconque. La méthode d'exploitation des corrélations temporelles consiste à calculer les trois vecteurs mouvement courants MV'1, MV'2 et MV'3 respectivement associés aux trois partitions P'1, P'2 et P'3 en fonction du vecteur mouvement, noté MVcol, qui appartient au macrobloc, noté $MBC_{N-1}$, ayant la même position que le macrobloc courant $MBC_N$ dans l'image précédente N-1.

Un inconvénient de la prédiction représentée à la figure 1B réside dans le fait que le partitionnement du macrobloc courant $MBC_N$ est différent de celui du macrobloc $MBC_{N-1}$, ce qui nuit de façon notable à la précision de la prédiction des trois vecteurs mouvement courants MV'1, MV'2 et MV'3. Ainsi, dans le cas de la figure 1B, il est clair qu'en comparant la direction du vecteur MVcol par rapport à la direction des vecteurs MV'1, MV'2 et MV'3, la prédiction du vecteur mouvement courant MV'3 sera moins bonne que celle des vecteurs mouvement courants MV'1 et MV'2.

### Objet et résumé de l'invention

Un des buts de l'invention est de remédier à des inconvénients de l'état de la technique précité. Un procédé de prédiction, un appareil et un programme d'ordinateur selon les revendications sont décrits.

Un repartitionnement permet avantageusement de prédire le vecteur mouvement courant d'une partition courante à partir de vecteurs mouvement appartenant à des partitions de référence plus adaptées, en particulier d'un point de vue forme, taille et disposition, que celles issues du partitionnement initial d'au moins un macrobloc de référence qui a été effectué lors du codage de ce macrobloc.

L'invention permet ainsi d'améliorer de façon importante la précision de la prédiction des vecteurs courants en codage Inter.

Il convient par ailleurs de noter que les vecteurs mouvement de référence qui sont déterminés à la suite du nouveau partitionnement ne sont pas utilisés pour le codage de la partition courante.

Dans un mode de réalisation, les partitions de référence obtenues à la suite du nouveau partitionnement sont au voisinage le plus proche de la partition courante.

Une telle disposition permet ainsi d'affiner davantage la précision de la prédiction.

Dans un autre mode de réalisation, une partition de référence a la même position que la partition courante qui lui est associée, dans une image appartenant à la zone causale de référence.

Dans encore un autre mode de réalisation, la partition de référence est de forme et de taille identiques à celles de la partition courante qui lui est associée.

Une telle disposition augmente sensiblement la précision de la prédiction temporelle des vecteurs courants. En effet, les vecteurs mouvement de référence obtenus décrivent ainsi un mouvement plus proche du mouvement réel entre la portion d'image courante et la portion d'image de référence que le mouvement décrit par les vecteurs mouvement de référence de l'art antérieur.

Selon encore d'autres modes de réalisation, les partitions de référence obtenues à la suite du nouveau partitionnement se chevauchent ou sont disjointes.

### Brève description des dessins

D'autres caractéristiques et avantages apparaîtront à la lecture de modes de réalisation préférés décrits en référence aux figures dans lesquelles:

- la figure 1A représente un exemple de prédiction temporelle de l'art antérieur qui exploite les corrélations spatiales entre différents macroblocs d'une même image,
- la figure 1B représente un exemple de prédiction temporelle de l'art antérieur qui exploite les corrélations temporelles entre un macrobloc courant à coder d'une image N et un macrobloc de référence d'une image précédente N-1,
- la figure 2 représente les étapes du procédé de codage selon l'invention,
- la figure 3 représente un mode de réalisation d'un dispositif de codage selon l'invention,
- la figure 4 représente un exemple de prédiction spatiale selon l'invention, qui exploite les corrélations temporelles entre le macrobloc courant à coder et des macroblocs de référence,
- la figure 5 représente un dispositif de décodage selon l'invention,
- la figure 6 représente des étapes du procédé de décodage selon l'invention,
- la figure 7 représente un exemple de prédiction temporelle selon l'invention qui exploite les corrélations temporelles entre le macrobloc courant à coder d'une image IE et les macroblocs de référence d'une image précédente IE-1,
- les figures 8A et 8B représentent respectivement deux exemples de partitionnement possibles d'un macrobloc de référence dans le cas de la prédiction temporelle de la figure 7.

### Description détaillée d'un mode de réalisation

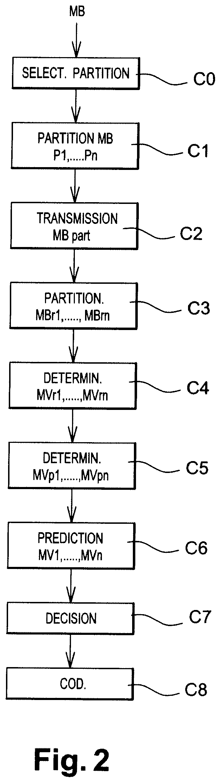

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C0 à C7, représentées à la **figure 2.**

Il est à noter que le procédé de décodage selon l'invention est également implémenté de manière logicielle ou matérielle par modifications d'un décodeur initialement conforme à la norme H.264/MPEG-4 AVC.

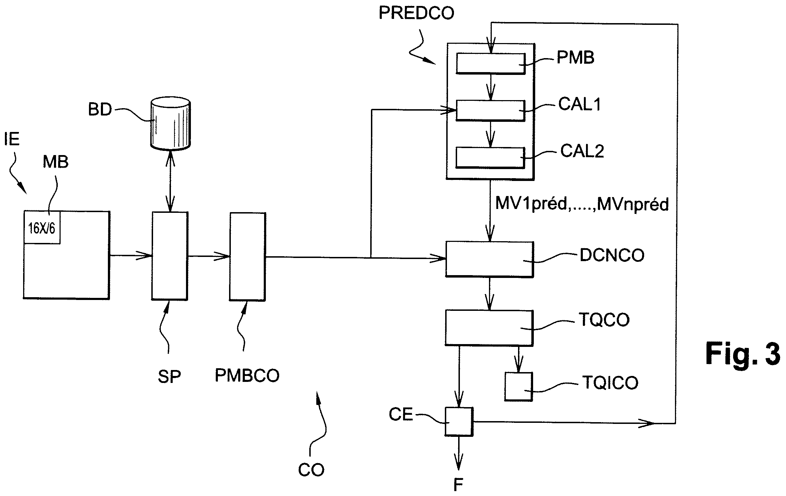

Le procédé de codage selon l'invention est implémenté dans un dispositif de codage CO représenté à la figure 3.

En référence aux figures 2 et 3, la première étape C0 est la sélection, pour un macrobloc appartenant à une image IE de la séquence d'images à coder, d'une partition de pixels particulière plus petite choisie dans un ensemble prédéterminé de partitions de forme prédéterminée. Pour cela, un macrobloc MB, par exemple de taille 16x16, et appartenant à l'image IE, est appliqué en entrée d'un module SP de sélection de partitions, représenté à la **figure 3.**

Ce module SP de sélection de partitions utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998*).* Elles ne seront donc pas décrites plus avant.

Lesdites partitions sont regroupées dans une base de données BD du codeur CO. De telles partitions peuvent être de forme rectangulaire ou carrée ou bien d'autres formes géométriques, telles que par exemple des formes sensiblement linéaires.

Dans l'exemple représenté, le module de sélection SP sélectionne une partition de forme carrée et de taille 4x4.

L'étape suivante C1 représentée à la **figure 2** est le découpage du macrobloc MB selon ladite partition initiale choisie, en un nombre Np de partitions. Dans l'exemple représenté, le macrobloc MB est découpé en seize partitions P1, P2,..., P16, où P1 désigne la partition initiale. Un tel découpage est effectué par un module PMBCO de partitionnement de macroblocs représenté à la **figure 3** qui utilise un algorithme classique de partitionnement.

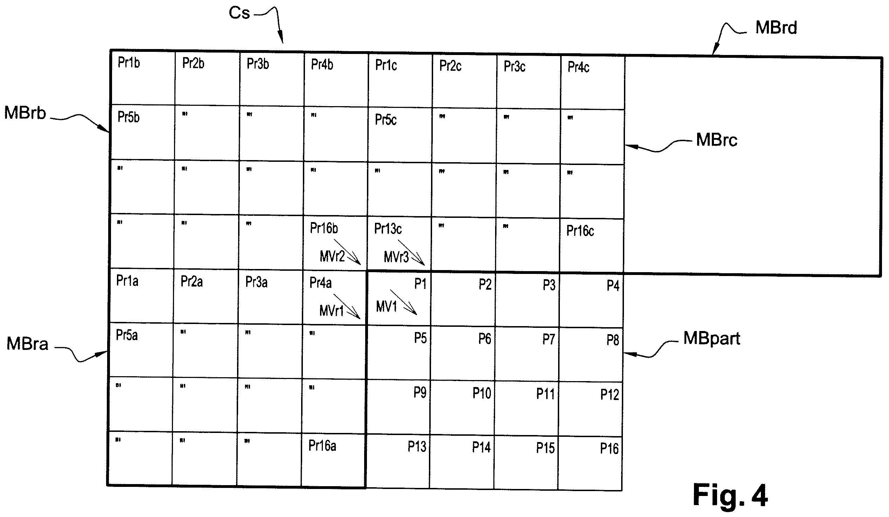

La **figure 4** représente le macrobloc MBpart qui a été obtenu après découpage selon la partition initiale P1 carrée de taille 4x4.

A la suite de l'étape de partitionnement C1, au cours d'une étape C2 représentée à **la figure 2,** le module de partitionnement PMBCO transmet le macrobloc MBpart qui vient d'être partitionné à un module de prédiction PREDCO représenté à **la figure 3.**

Un tel module de prédiction PREDCO est destiné à prédire le vecteur mouvement de chaque partition P1....P16 du macrobloc courant MBpart, à partir d'un vecteur mouvement prédicteur calculé à partir d'une portion d'une zone causale de référence déjà codée puis décodée. Dans l'exemple représenté à la **figure 4,** la zone causale de référence, notée Cs, comprend quatre macroblocs MBra, MBrb, MBrc et MBrd, dont par exemple les trois macroblocs de référence MBra, MBrb et MBrc sont utilisés pour la prédiction du vecteur mouvement de la partition P1, noté MV1.

En référence à **la figure 3,** de tels macroblocs de référence sont codés conformément à la norme H.264/MPEG-4AVC, c'est-à-dire qu'ils subissent, de façon connue en soi:

- un codage par transformée en cosinus discrète et quantification qui est effectué par un module TQCO de transformée et de quantification,
- puis un décodage par transformée en cosinus discrète inverse et quantification inverse, lequel est effectué par le module TQICO de transformée et de quantification inverse.

En référence toujours à la **figure 3,** le module de prédiction PREDCO comprend, selon l'invention:

- un module de partitionnement PMB destiné à découper chacun des macroblocs de référence MBra, MBrb et MBrc selon Nr partitions de référence,
- un premier module de calcul CAL1 destiné à déterminer, pour une partition à prédire parmi les seize partitions P1,..., P16, une ou plusieurs partitions de référence voisines de la partition à prédire, puis à calculer un vecteur mouvement associé à chaque partition de référence déterminée,
- un second module de calcul CAL2 destiné à calculer le vecteur mouvement de la partition courante à prédire en fonction des vecteurs mouvement de référence calculés par le premier module de calcul CAL1.

Au cours d'une étape C3 représentée à la **figure 2,** le module de partitionnement PMB de la figure 3 procède au découpage de chacun des macroblocs de référence MBra, MBrb et MBrc selon Nr partitions de référence. Dans l'exemple représenté à la **figure 4,** chaque macrobloc de référence est découpé en seize partitions de référence Pr1, Pr2, ...Pr16 qui sont chacune préférentiellement de même forme et de même taille que la partition courante à prédire P1, c'est-à-dire carrée et de taille 4x4.

Au cours d'une étape C4 représentée à la **figure 2,** le module de calcul CAL1 de la figure 3 calcule trois vecteurs mouvement de référence MVr1, MVr2 et MVr3 correspondant respectivement aux partitions de référence les plus proches voisines de la partition P1 à prédire. Comme on peut le voir sur la **figure 4,** les partitions de référence utilisées sont Pr4a, Pr16b et Pr13c.

Au cours d'une étape C5, le module de calcul CAL2 de la figure 3 calcule un vecteur mouvement prédicteur MVp1 qui est fonction des vecteurs mouvement de référence MVr1, MVr2 et MVr3 obtenus à l'étape C4 précédente. Un tel calcul consiste par exemple à calculer le médian des vecteurs mouvement de référence MVr1, MVr2 et MVr3 conformément à l'équation ci-dessous:

$$MVp1=Méd (MVr1, MVr2 \text{ et } MVr3)$$

Au cours d'une étape C6, le module de prédiction PREDCO de la figure 3 prédit le vecteur mouvement MV1 de la partition courante P1 à partir du vecteur mouvement prédicteur MVp1 calculé à l'étape précédente.

Le module de calcul de prédiction PREDCO de la figure 3 délivre alors un premier vecteur mouvement prédit MV1pred qui, dans le cas où celui-ci est retenu par le codeur CO comme étant le vecteur optimal, est immédiatement codé par le module de transformée et de quantification TQCO, puis décodé par le module TQICO de transformée et de quantification inverse.

La prédiction spatiale qui vient d'être décrite ci-dessus est particulièrement performante en raison du fait que le vecteur mouvement de la partition courante P1 est prédit à partir de vecteurs mouvement qui appartiennent à des partitions de référence de forme et de taille bien mieux adaptées que dans l'art antérieur.

Les étapes C3 à C6 sont ensuite réitérées de façon à prédire les vecteurs mouvement courants (non représentés sur la figure 4) respectivement des partitions P2 à P16 du macrobloc courant MBpart, de façon à obtenir les vecteurs mouvements prédits MV2pred,...., MV16pred.

Une fois différentes prédictions possibles calculées par le module de calcul de prédiction PREDCO, au cours d'une étape C7 représentée à la **figure 2,** un module de décision DCNCO, représenté à la **figure 3,** parcourt les macroblocs partitionnés de l'image IE et choisit, dans cette étape C7, le mode de prédiction utilisé pour coder chacun de ces macroblocs. Parmi les prédictions possibles pour un macrobloc, le module de décision DCNCO choisit la prédiction optimale selon un critère débit distorsion bien connu de l'homme du métier.

Chaque macrobloc prédit est codé, au cours d'une étape C8, comme dans la norme H.264/MPEG-4 AVC.

Une fois ce codage structurel effectué par le module de décision DCNCO, les coefficients de résidus s'ils existent, correspondants aux blocs de l'image IE, sont envoyés au module TQCO de transformée et de quantification, pour subir des transformées en cosinus discrètes puis une quantification. Les tranches de macroblocs avec ces coefficients quantifiés sont ensuite transmises à un module CE de codage entropique, pour produire, avec les autres images de la séquence vidéo déjà codées de la même façon que l'image IE, un flux vidéo F, binaire, codé selon l'invention.

Le flux binaire F est d'abord envoyé à un module DE de décodage entropique, décodage inverse de celui effectué par le module de codage entropique CE représenté à **la figure 3.** Puis, pour chaque macrobloc d'image à reconstruire, les coefficients décodés par le module DE sont envoyés à un module QTIDO de quantification inverse et de transformée inverse.

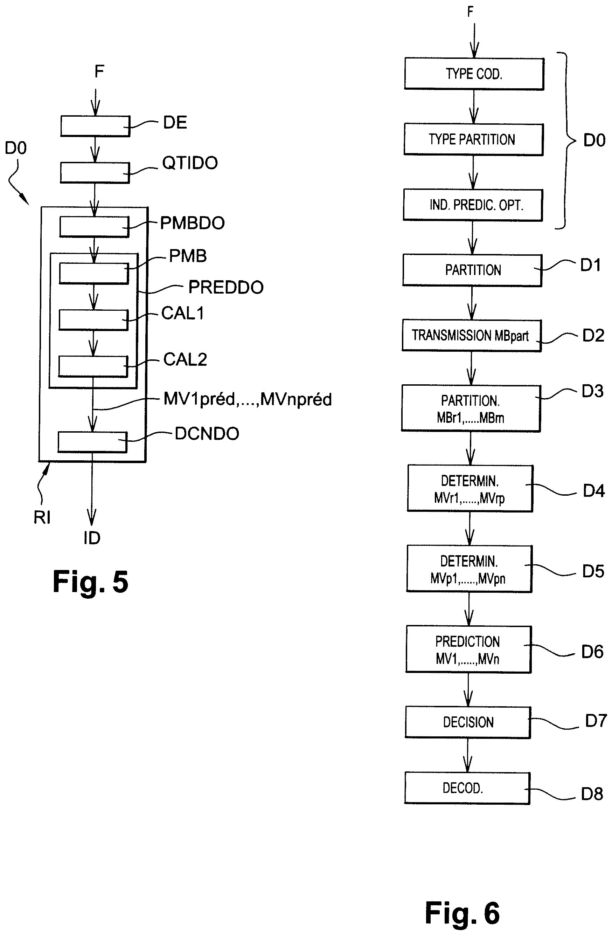

Un module RI de reconstruction d'image reçoit alors des données décodées correspondant aux données produites par le module DCNCO (**figure 3**) à l'étape C7 de codage selon l'invention, aux erreurs de transmission près. Le module RI met en oeuvre des étapes D0 à D8 du procédé de décodage selon l'invention, telle que représentées à la **figure 6.**

La première étape D0 est le décodage de structures de données codées dans une tranche d'un macrobloc courant de l'image IE à décoder. De façon connue en soi, le module de reconstruction RI détermine à partir des données de ladite tranche de macrobloc:

- le type de codage desdites données, Inter selon l'invention,
- le type de partitionnement du macrobloc à reconstruire, Inter 4x4 dans le mode de réalisation décrit,
- l'indice du vecteur mouvement optimal tel que sélectionné par le module de décision DCNCO à l'étape C7 précitée.

L'étape suivante D1 représentée à la **figure 6** est le découpage du macrobloc courant à décoder, conformément au partitionnement déterminé à l'étape D0. A cet effet, un module PMBDO de partitionnement de macroblocs représenté figure 5, qui ressemble en tous points à celui représenté à la **figure 3,** découpe le macrobloc en une pluralité de Np partitions, soit seize partitions 4x4 dans l'exemple représenté.

Au cours d'une étape D2 représentée à la **figure 6,** le module de partitionnement PMBDO transmet le macrobloc courant à décoder et qui vient d'être partitionné en Np partitions, à un module de prédiction PREDDO représenté à **la figure 5,** qui est en tous points semblable au module de prédiction PREDCO du codeur CO de la **figure 3,** et qui, pour cette raison, ne sera pas décrit à nouveau en détail.

Au cours des étapes D3 à D6, le module de prédiction PREDDO effectue le même algorithme que celui effectué par le module de prédiction PREDDO du codeur CO précité, de façon à obtenir des vecteurs mouvement prédits conformément à la méthode décrite ci-dessus.

Au cours d'une étape D7, un module de décision DCNDO choisit la prédiction optimale selon un critère débit distorsion bien connu de l'homme du métier.

Chaque macrobloc prédit est ensuite décodé, au cours d'une étape D8, comme dans la norme H.264/MPEG-AVC.

Une fois tous les macroblocs de l'image IE décodés, le module RI de reconstruction d'image fournit en sortie du décodeur DO, une image ID correspondant au décodage de l'image IE.

Compte tenu du fait que l'algorithme de prédiction effectué au décodeur DO est en tous point le même que celui effectué au codeur CO, le coût de l'information induit par les prédicteurs utilisés s'en trouve fortement réduit.

Description détaillée d'un second mode de réalisation

Le second mode de réalisation décrit ci-dessous se distingue principalement du précédent, par le fait que le module de prédiction PREDCO représenté à la **figure 3** effectue une prédiction temporelle des vecteurs mouvement courants.

Conformément au second mode de réalisation, l'étape de sélection de partitions précitée C0 n'est pas effectuée.

Au cours de l'étape C1 de la figure 2, le module PMBCO de partitionnement de macroblocs de la figure 3 procède au découpage du macrobloc MB selon ladite partition initiale choisie, en un nombre Np de partitions courantes.

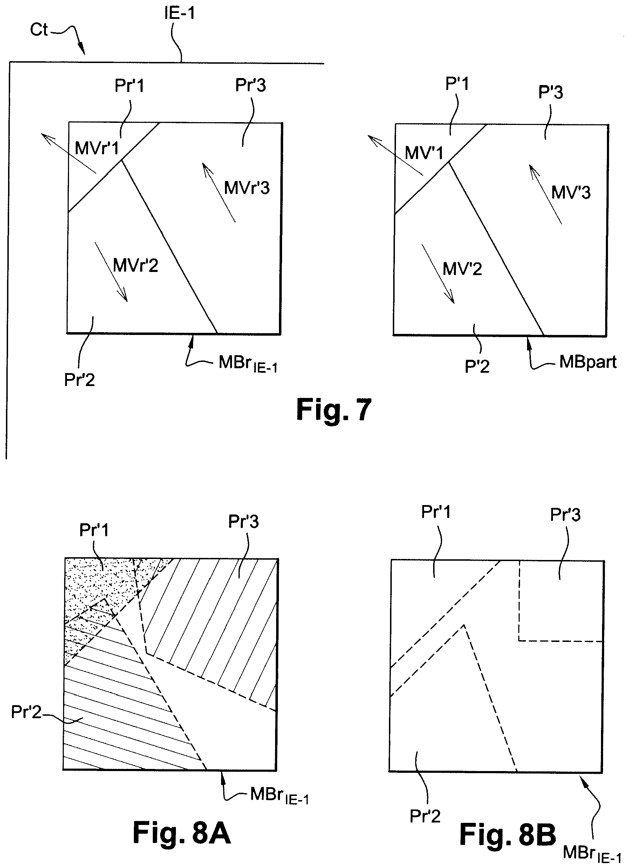

Dans l'exemple représenté à la **figure 7,** le macrobloc courant MB est découpé en trois partitions P'1, P'2 et P'3 qui sont toutes de forme de taille différentes.

Au cours de l'étape C2 de la figure 2, le module de partitionnement PMBCO de la figure 3 transmet le macrobloc MBpart qui vient d'être partitionné au module de prédiction PREDCO de la **figure 3.**

Dans le second mode de réalisation décrit ici, le module de prédiction PREDCO est destiné à prédire les trois vecteurs mouvement associés respectivement aux trois partitions P'1, P'2 et P'3 du macrobloc courant MBpart, à partir respectivement de trois vecteurs mouvement de référence d'un même macrobloc de référence, noté MBr$_{IE-1}$, ayant la même position que le macrobloc courant MBpart dans l'image précédente IE-1. Dans l'exemple représenté figure 7, l'image précédente IE-1 est l'image qui a été choisie dans la zone causale temporelle Ct qui comprend d'autres images de référence que l'image IE-1.

Comme mentionné ci-dessus en référence au premier mode de réalisation, le macrobloc de référence MBr$_{IE-1}$ a été préalablement codé puis décodé.

Au cours de l'étape C3 de la figure 2, le module de partitionnement PMBCO procède au découpage du macrobloc de référence MBr$_{IE-1}$ selon Nr partitions de référence. Dans l'exemple représenté à la **figure 7**, le macrobloc de référence MBr$_{IE-1}$ est découpé de façon identique au macrobloc courant MBpart, soit selon trois partitions Pr'1, Pr'2 et Pr'3 qui sont toutes de forme et de taille différentes.

Au cours de l'étape C4 représentée à la **figure 2,** le module de calcul CAL1 de la figure 3 calcule trois vecteurs mouvement de référence MVr'1, MVr'2 et MVr'3 correspondant respectivement aux trois partitions de référence Pr'1, Pr'2 et Pr'3.

Au cours de l'étape C5 de la figure 2, le module de calcul CAL2 de la figure 3 calcule trois vecteurs mouvement prédicteurs MVp'1, MVp'2 et MVp'3 qui sont fonction respectivement des trois vecteurs mouvement de référence MVr'1, MVr'2 et MVr'3 obtenus à l'étape C4 précédente. Un tel calcul consiste dans l'exemple représenté à effectuer les égalités suivantes:

- MVp'1 = MVr'1
- MVp'2 = MVr'2
- MVp'3 = MVr'3

Au cours de l'étape C6, le module de prédiction PREDCO de la figure 3 prédit les vecteur mouvement MV'1, MV'2 et MV'3 de la partition courante P'1 respectivement à partir des trois vecteurs mouvement prédicteurs MVp'1, MVp'2 et MVp'3 calculés à l'étape précédente.

Le module de calcul de prédiction PREDCO de la figure 3 délivre alors trois vecteurs mouvement prédits MV'1 pred, MV'2pred et MV'3pred dont la précision de la prédiction est particulièrement optimisée grâce à la mise en correspondance spatiale et temporelle du partitionnement du macrobloc courant MBpart et du partitionnement du macrobloc de référence MBr$_{IE-1}$.

Les étapes suivantes de choix de prédiction optimale C7 et de codage C8 sont respectivement semblables aux étapes précitées C7 et C8 du premier mode de réalisation et, pour cette raison, ne seront pas décrites à nouveau.

Le module de reconstruction RI du décodeur DO met ensuite en oeuvre des étapes D0 à D8 similaires à celles du procédé de décodage conforme au premier mode de réalisation.

La première étape D0 est le décodage de structures de données codées dans une tranche d'un macrobloc courant de l'image IE à décoder. De façon connue en soi, le module de reconstruction RI détermine à partir des données de ladite tranche de macrobloc:

- le type de codage desdites données, Inter dans le mode de réalisation décrit,
- le type de partitionnement du macrobloc à reconstruire, géométrique quelconque dans le mode réalisation décrit,
- l'indice du vecteur mouvement optimal tel que sélectionné par le module de décision DCNCO à l'étape C7.

Au cours de l'étape suivante D1, le module PMBDO de partitionnement de macroblocs découpe le macrobloc selon les trois partitions précitées P'1, P'2 et P'3.

A la suite de l'étape de partitionnement D1, au cours d'une étape D2 similaire à celle du premier mode de réalisation précité, le module de partitionnement PMBDO transmet le macrobloc courant à décoder et qui vient d'être partitionné en trois partitions, au module de prédiction PREDDO précité.

Au cours des étapes D3 à D6, le module de prédiction PREDDO effectue le même algorithme que celui effectué par le module PREDCO, au cours des étapes C3 à C6 précitées.

Au cours de l'étape D7, le module de décision DCNDO choisit la prédiction optimale selon un critère débit distorsion bien connu de l'homme du métier.

Chaque macrobloc prédit est ensuite décodé, au cours de l'étape D8, comme dans la norme H.264/MPEG-AVC.

Une fois tous les macroblocs de l'image IE décodés, le module RI de reconstruction d'image fournit en sortie du décodeur DO, une image ID correspondant au décodage de l'image IE.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, le macrobloc de référence MBr$_{IE-1}$ peut être découpé différemment de celui du macrobloc courant à prédire MBpart.

La figure 8A représente, s'agissant en particulier du second mode de réalisation, un macrobloc de référence MBr$_{IE-1}$ qui a été découpé selon un nombre de partitions de référence Pr'1, Pr'2 et Pr'3 égal à celui du macrobloc courant MBpart de la **figure 7**. Dans cet exemple:

- la partition de référence Pr'1 a la même forme que la partition courante P'1 et est de taille différente,
- la partition de référence Pr'2 a une forme et une taille différentes de celles de la partition courante P'2,
- la partition de référence Pr'3 a une forme et une taille différentes de celles de la partition courante P'3.

Par ailleurs, les partitions de référence Pr'1, Pr'2 et Pr'3 se chevauchent.

La figure 8B représente, s'agissant en particulier du second mode de réalisation, un macrobloc de référence MBr$_{IE-1}$ qui a été découpé selon un nombre de partitions de référence Pr'1, Pr'2 et Pr'3 égal à celui du macrobloc courant MBpart de la **figure 7**. Dans cet exemple, lesdites partitions de référence sont disjointes et ont une forme et/ou une taille différentes respectivement de celles des partitions P'1, P'2 et P'3 du macrobloc courant MBpart.

**Revendications**

**1.** Procédé de prédiction spatiale ou temporelle d'un vecteur mouvement d'une partition courante (P1; P'1) d'un macrobloc courant d'une image courante, ledit macrobloc courant étant découpé en plusieurs partitions, ladite prédiction étant mise en oeuvre par rapport à au moins un macrobloc de référence faisant partie d'une pluralité de macroblocs de référence déjà codés puis décodés (MBra, MBrb, MBrc; MBr$_{IE-1}$) qui constituent soit une zone de l'image courante qui avoisine le macrobloc courant si la prédiction est spatiale, soit une zone contenant au moins une image déjà codée puis décodée si la prédiction est temporelle,

ledit procédé comprenant, relativement à ladite partition courante (P1; P'1), les étapes consistant à:

- repartitionner (C3, D3) au moins un (MBra; MBr$_{IE-1}$) des macroblocs de référence en une pluralité de partitions de référence (Pr1a-Pr16a; Pr'1-Pr'3) pour la prédiction du vecteur mouvement de la partition courante,
les partitions de référence étant respectivement de même forme et de même taille que les partitions du macrobloc courant, dans le cas d'une prédiction spatiale ou temporelle du vecteur mouvement de ladite partition courante (P1),
- déterminer (C4, D4) un vecteur mouvement (MVr1; MVr'1) associé à une partition (Pr4a; Pr'1) parmi la pluralité de partitions de référence, qui a la même forme et la même taille que la partition courante,
- déterminer (C5, D5) un vecteur mouvement prédicteur à partir dudit vecteur mouvement déterminé (MVr1; MVr'1),
- prédire (C6, D6) le vecteur mouvement de ladite partition courante à partir dudit vecteur mouvement prédicteur déterminé.

**2.** Procédé de prédiction selon la revendication 1, dans lequel lorsque la prédiction du vecteur mouvement de la partition courante (P1) est spatiale et lorsque plusieurs macroblocs de référence sont partitionnés chacun en une pluralité de partitions de référence (Pr1a-Pr16a, Pr1b-Pr16b, Pr1c-Pr16c) ayant la même forme et la même taille que la partition courante (P1) :

- sélectionner, parmi les partitions de référence de ladite pluralité, les partitions de référence (Pr4a, Pr16b, Pr13c) qui sont les plus proches voisines de la partition courante (P1),
- déterminer (C4, D4) un vecteur mouvement (MVr1-MVr3) associé à chaque partition de référence (Pr4a, Pr16b, Pr13c) sélectionnée,
- déterminer (C5, D5) un vecteur mouvement prédicteur à partir desdits vecteurs mouvement déterminés (MVr1-MVr3),
- prédire (C6, D6) le vecteur mouvement de ladite partition courante à partir dudit vecteur mouvement prédicteur déterminé.

**3.** Procédé de prédiction selon la revendication 1, dans lequel, si la prédiction de vecteur mouvement est temporelle, les partitions de référence (Pr'1, Pr'2, Pr'3) se chevauchent.

**4.** Procédé de prédiction selon la revendication 1, dans lequel, si la prédiction de vecteur mouvement est temporelle, les partitions de référence (Pr'1, Pr'2, Pr'3) sont disjointes.

**5.** Procédé de décodage d'un flux (F) de données représentatif d'une image ou d'une séquence d'images, ledit flux (F) comportant des données représentatives d'au moins une portion d'une desdites images (IE), ledit procédé mettant en oeuvre une étape de prédiction selon l'une quelconque des revendications 1 à 4.

6. Procédé de codage d'une image ou d'une séquence d'images générant un flux (F) de données comportant des données représentatives d'au moins une portion d'une desdites images (IE), ledit procédé mettant en oeuvre une étape de prédiction selon l'une quelconque des revendications 1 à 4.

7. Dispositif de prédiction spatiale ou temporelle d'un vecteur mouvement d'une partition courante (P1; P'1) d'un macrobloc courant d'une image courante, ledit macrobloc courant étant découpé en plusieurs partitions, ladite prédiction étant mise en oeuvre par rapport à un macrobloc de référence faisant partie d'une pluralité de macroblocs de référence déjà codés puis décodés (MBra, MBrb, MBrc; MBr$_{IE-1}$) qui constituent soit une zone de l'image courante qui avoisine le macrobloc courant si la prédiction est spatiale, soit une zone contenant au moins une image déjà codée puis décodée si la prédiction est temporelle,
ledit dispositif comprenant:

- des moyens (PMB) pour repartitionner au moins un (MBra; MBr$_{IE-1}$) des macroblocs de référence en une pluralité de partitions de référence (Pr1a-Pr16a; Pr'1-Pr'3) pour la prédiction du vecteur mouvement de la partition courante, les partitions de référence étant de même forme et de même taille que les partitions du macrobloc courant, dans le cas d'une prédiction spatiale ou temporelle du vecteur mouvement de ladite partition courante (P1),
- des moyens (CAL1) pour déterminer un vecteur mouvement (MVr1; MVr'1) associé à une partition (Pr4a; Pr'1) parmi la pluralité de partitions de référence qui a la même forme et la même taille que la partition courante,
- des moyens (CAL2) pour déterminer un vecteur mouvement prédicteur à partir dudit vecteur mouvement déterminé (MVr1; MVr'1),
- des moyens pour prédire le vecteur mouvement de ladite partition courante à partir dudit vecteur mouvement prédicteur déterminé.

8. Dispositif (DO) de décodage d'un flux (F) de données représentatif d'une image (IE) ou d'une séquence d'images, ledit flux (F) comportant des données représentatives d'au moins une portion d'une desdites images (IE), ledit dispositif de décodage comprenant un dispositif (PREDDO) de prédiction selon la revendication 7.

9. Dispositif de codage (CO) d'une image ou d'une séquence d'images générant un flux (F) de données comportant des données représentatives d'au moins une portion d'une desdites images (IE), ledit dispositif comprenant un dispositif (PREDCO) de prédiction selon la revendication 7.

10. Programme d'ordinateur comportant des instructions pour mettre en oeuvre le procédé de prédiction selon l'une quelconque des revendications 1 à 4, lorsqu'il est exécuté sur un ordinateur.

11. Programme d'ordinateur comportant des instructions pour mettre en oeuvre le procédé de décodage selon la revendication 5, lorsqu'il est exécuté sur un ordinateur.

12. Programme d'ordinateur comportant des instructions pour mettre en oeuvre le procédé de codage selon la revendication 6, lorsqu'il est exécuté sur un ordinateur.

**Patentansprüche**

1. Verfahren zur räumlichen oder zeitlichen Prädiktion eines Bewegungsvektors einer aktuellen Partition (P1; P'1) eines aktuellen Makroblocks eines aktuellen Bildes, wobei der aktuelle Makroblock in mehrere Partitionen aufgeteilt ist, wobei die Prädiktion in Bezug auf wenigstens einen Referenz-Makroblock durchgeführt wird, der Bestandteil einer Vielzahl von bereits codierten und anschließend decodierten Referenz-Makroblöcken (MBra, MBrb, MBrc; MBr$_{IE-1}$) ist, welche entweder einen Bereich des aktuellen Bildes bilden, der an den aktuellen Makroblock angrenzt, falls die Prädiktion räumlich ist, oder einen Bereich, der wenigstens ein bereits codiertes und anschließend decodiertes Bild enthält, falls die Prädiktion zeitlich ist,
wobei das Verfahren in Bezug auf die aktuelle Partition (P1; P'1) die folgenden Schritte umfasst:

- Repartitionieren (C3, D3) wenigstens eines (MBra; MBr$_{IE-1}$) der Referenz-Makroblöcke in eine Vielzahl von Referenz-Partitionen (Pr1a-Pr16a; Pr'1-Pr'3) für die Prädiktion des Bewegungsvektors der aktuellen Partition,
wobei die Referenz-Partitionen im Falle einer räumlichen oder zeitlichen Prädiktion des Bewegungsvektors der aktuellen Partition (P1) von derselben Form bzw. von derselben Größe wie die Partitionen des aktuellen Makroblocks sind,
- Bestimmen (C4, D4) eines Bewegungsvektors (MVr1; MVr'1), der einer Partition (Pr4a; Pr'1) aus der Vielzahl von Referenz-Partitionen zugeordnet ist, welche dieselbe Form und dieselbe Größe wie die aktuelle Partition hat,

- Bestimmen (C5, D5) eines Vorhersage-Bewegungsvektors aus dem bestimmten Bewegungsvektor (MVr1; MVr'1),
- Vorhersagen (C6, D6) des Bewegungsvektors der aktuellen Partition ausgehend von dem bestimmten Vorhersage-Bewegungsvektor.

2. Verfahren zur Prädiktion nach Anspruch 1, welches umfasst, wenn die Prädiktion des Bewegungsvektors der aktuellen Partition (P1) räumlich ist und wenn mehrere Referenz-Makroblöcke jeweils in eine Vielzahl von Referenz-Partitionen (Pr1a-Pr16a; Pr1b-Pr16b, Pr1c-Pr16c) partitioniert sind, die dieselbe Form und dieselbe Größe wie die aktuelle Partition (P1) haben:

- Auswählen, aus den Referenz-Partitionen der Vielzahl, der Referenz-Partitionen (Pr4a, Pr16b, Pr13c), welche der aktuellen Partition (P1) am nächsten benachbart sind;
- Bestimmen (C4, D4), für jede ausgewählte Referenz-Partition (Pr4a, Pr16b, Pr13c), eines ihr zugeordneten Bewegungsvektors (MVr1-MVr3),
- Bestimmen (C5, D5) eines Vorhersage-Bewegungsvektors aus den bestimmten Bewegungsvektoren (MVrl-MVr3),
- Vorhersagen (C6, D6) des Bewegungsvektors der aktuellen Partition ausgehend von dem bestimmten Vorhersage-Bewegungsvektor.

3. Verfahren zur Prädiktion nach Anspruch 1, wobei, falls die Prädiktion des Bewegungsvektors zeitlich ist, die Referenz-Partitionen (Pr'1, Pr'2, Pr'3) sich überlappen.

4. Verfahren zur Prädiktion nach Anspruch 1, wobei, falls die Prädiktion des Bewegungsvektors zeitlich ist, die Referenz-Partitionen (Pr'1, Pr'2, Pr'3) disjunkt sind.

5. Verfahren zur Decodierung eines Stroms (F) von Daten, der für ein Bild oder eine Folge von Bildern repräsentativ ist, wobei der Strom (F) Daten umfasst, die für wenigstens einen Abschnitt eines der Bilder (IE) repräsentativ sind, wobei in dem Verfahren ein Schritt der Prädiktion nach einem der Ansprüche 1 bis 4 durchgeführt wird.

6. Verfahren zur Codierung eines Bildes oder einer Folge von Bildern, welche einen Strom (F) von Daten erzeugt, der Daten umfasst, die für wenigstens einen Abschnitt eines der Bilder (IE) repräsentativ sind, wobei in dem Verfahren ein Schritt der Prädiktion nach einem der Ansprüche 1 bis 4 durchgeführt wird.

7. Vorrichtung zur räumlichen oder zeitlichen Prädiktion eines Bewegungsvektors einer aktuellen Partition (P1; P'1) eines aktuellen Makroblocks eines aktuellen Bildes, wobei der aktuelle Makroblock in mehrere Partitionen aufgeteilt ist, wobei die Prädiktion in Bezug auf Referenz-Makroblock durchgeführt wird, der Bestandteil einer Vielzahl von bereits codierten und anschließend decodierten Referenz-Makroblöcken (MBra, MBrb, MBrc; MBr$_{IE-1}$) ist, welche entweder einen Bereich des aktuellen Bildes bilden, der an den aktuellen Makroblock angrenzt, falls die Prädiktion räumlich ist, oder einen Bereich, der wenigstens ein bereits codiertes und anschließend decodiertes Bild enthält, falls die Prädiktion zeitlich ist, wobei die Vorrichtung umfasst:

- Mittel (PMB) zum Repartitionieren wenigstens eines (MBra; MBr$_{IE-1}$) der Referenz-Makroblöcke in eine Vielzahl von Referenz-Partitionen (Pr1a-Pr16a; Pr'1-Pr'3) für die Prädiktion des Bewegungsvektors der aktuellen Partition, wobei die Referenz-Partitionen im Falle einer räumlichen oder zeitlichen Prädiktion des Bewegungsvektors der aktuellen Partition (P1) von derselben Form und von derselben Größe wie die Partitionen des aktuellen Makroblocks sind,
- Mittel (CAL1) zum Bestimmen eines Bewegungsvektors (MVr1; MVr'1), der einer Partition (Pr4a; Pr'1) aus der Vielzahl von Referenz-Partitionen zugeordnet ist, welche dieselbe Form und dieselbe Größe wie die aktuelle Partition hat,
- Mittel (CAL2) zum Bestimmen eines Vorhersage-Bewegungsvektors aus dem bestimmten Bewegungsvektor (MVr1; MVr'1),
- Mittel zum Vorhersagen des Bewegungsvektors der aktuellen Partition ausgehend von dem bestimmten Vorhersage-Bewegungsvektor.

8. Vorrichtung (DO) zur Decodierung eines Stroms (F) von Daten, der für ein Bild (IE) oder eine Folge von Bildern repräsentativ ist, wobei der Strom (F) Daten umfasst, die für wenigstens einen Abschnitt eines der Bilder (IE) repräsentativ sind, wobei die Vorrichtung zur Decodierung eine Vorrichtung (PREDDO) zur Prädiktion nach Anspruch 7 umfasst.

9. Vorrichtung zur Codierung (CO) eines Bildes oder einer Folge von Bildern, welche einen Strom (F) von Daten erzeugt, der Daten umfasst, die für wenigstens einen Abschnitt eines der Bilder (IE) repräsentativ sind, wobei die Vorrichtung eine Vorrichtung (PREDCO) zur Prädiktion nach Anspruch 7 umfasst.

10. Computerprogramm, welches Anweisungen zur Durchführung des Verfahrens zur Prädiktion nach einem der Ansprüche 1 bis 4, wenn es auf einem Computer ausgeführt wird, umfasst.

11. Computerprogramm, welches Anweisungen zur Durchführung des Verfahrens zur Decodierung nach Anspruch 5, wenn es auf einem Computer ausgeführt wird, umfasst.

12. Computerprogramm, welches Anweisungen zur Durchführung des Verfahrens zur Codierung nach Anspruch 6, wenn es auf einem Computer ausgeführt wird, umfasst.

**Claims**

1. Method for spatial or temporal prediction of a movement vector of a current partition (P1; P'1) of a current macroblock of a current image, said current macroblock being divided into a plurality of partitions, said prediction being implemented with respect to at least one reference macroblock forming part of a plurality of reference macroblocks (MBra, MBrb, MBrc; MBr$_{IE-1}$) that have already been coded then decoded, which form either a zone of the current image that neighbours the current macroblock if the prediction is spatial, or a zone containing at least one image that has already been coded then decoded if the prediction is temporal,
said method comprising, relatively to said current partition (P1; P'1), steps consisting in:

   - repartitioning (C3, D3) at least one (MBra; MBr$_{IE-1}$) of the reference macroblocks into a plurality of reference partitions (Pr1a-Pr16a; Pr'1-Pr'3) for the prediction of the movement vector of the current partition, the reference partitions respectively being of the same shape and of the same size as the partitions of the current macroblock, in the case of a spatial or temporal prediction of the movement vector of said current partition (P1),
   - determining (C4, D4) a movement vector (MVr1; MVr'1) associated with one partition (Pr4a; Pr'1) among the plurality of reference partitions that has the same shape and the same size as the current partition,
   - determining (C5, D5) a predictor movement vector from said determined movement vector (MVr1; MVr'1),
   - predicting (C6, D6) the movement vector of said current partition from said determined predictor movement vector.

2. Predicting method according to Claim 1, wherein when the prediction of the movement vector of the current partition (P1) is spatial and when a plurality of reference macroblocks are each partitioned into a plurality of reference partitions (Pr1a-Pr16a, Pr1b-Pr16b, Pr1c-Pr16c) having the same shape and the same size as the current partition (P1):

   - selecting the reference partitions (Pr4a, Pr16b, Pr13c) that are the nearest neighbours of the current partition (P1) among the reference partitions of said plurality,
   - determining (C4, D4) a movement vector (MVr1-MVr3) associated with each selected reference partition (Pr4a, Pr16b, Pr13c),
   - determining (C5, D5) a predictor movement vector from said determined movement vectors (MVr1-MVr3),
   - predicting (C6, D6) the movement vector of said current partition from said determined predictor movement vector.

3. Predicting method according to Claim 1, wherein, if the movement vector prediction is temporal, the reference partitions (Pr'1, Pr'2, Pr'3) overlap.

4. Predicting method according to Claim 1, wherein, if the movement vector prediction is temporal, the reference partitions (Pr'1, Pr'2, Pr'3) are separate.

5. Method for decoding a datastream (F) representative of an image or an image sequence, said stream (F) containing data representative of at least one segment of one of said images (IE), said method implementing a predicting step according to any one of Claims 1 to 4.

6. Method for coding an image or an image sequence generating a datastream (F) containing data representative of at least one segment of one of said images (IE), said method implementing a predicting step according to any one of Claims 1 to 4.

7. Device for spatial or temporal prediction of a movement vector of a current partition (P1; P'1) of a current macroblock of a current image, said current macroblock being divided into a plurality of partitions, said prediction being implemented with respect to a reference macroblock forming part of a plurality of reference macroblocks (MBra, MBrb, MBrc; MBr$_{IE-1}$) that have already been coded then decoded, which form either a zone of the current image that neighbours the current macroblock if the prediction is spatial, or a zone containing at least one image that has already been coded then decoded if the prediction is temporal, said device comprising:

   - means (PMB) for repartitioning at least one (MBra; MBr$_{IE-1}$) of the reference macroblocks into a plurality of reference partitions (Pr1a-Pr16a; Pr'1-Pr'3) for the prediction of the movement vector of the current partition, the reference partitions being of the same shape and of the same size as the partitions of the current macroblock, in the case of a spatial or temporal prediction of the movement vector of said current partition (P1),
- means (CAL1) for determining a movement vector (MVr1; MVr'1) associated with one partition (Pr4a; Pr'1) among the plurality of reference partitions that has the same shape and the same size as the current partition,
- means (CAL2) for determining a predictor movement vector from said determined movement vector (MVr1; MVr'1),
- means for predicting the movement vector of said current partition from said determined predictor movement vector.

8. Device (DO) for decoding a datastream (F) representative of an image (IE) or an image sequence, said stream (F) containing data representative of at least one segment of one of said images (IE), said decoding device comprising a predicting device (PREDDO) according to Claim 7.

9. Device (CO) for coding an image or an image sequence generating a datastream (F) containing data representative of at least one segment of one of said images (IE), said device comprising a predicting device (PREDCO) according to Claim 7.

10. Computer program comprising instructions for implementing the predicting method according to any one of Claims 1 to 4, when it is executed on a computer.

11. Computer program comprising instructions for implementing the decoding method according to Claim 5, when it is executed on a computer.

12. Computer program comprising instructions for implementing the coding method according to Claim 6, when it is executed on a computer.

Cs    BR1    BR2    BR4         Ia

ART ANTERIEUR

**Fig. 1A**

ART ANTERIEUR

**Fig. 1B**

MB

↓

| SELECT. PARTITION | C0 |

↓

| PARTITION MB<br>P1,.....Pn | C1 |

↓

| TRANSMISSION<br>MB part | C2 |

↓

| PARTITION.<br>MBr1,....., MBrn | C3 |

↓

| DETERMIN.<br>MVr1,.....,MVrn | C4 |

↓

| DETERMIN.<br>MVp1,.....,MVpn | C5 |

↓

| PREDICTION<br>MV1,.....,MVn | C6 |

↓

| DECISION | C7 |

↓

| COD. | C8 |

# Fig. 2

Fig. 3

EP 2 377 323 B1

Fig. 4

**Fig. 5**

**Fig. 6**

Fig. 7

Fig. 8A

Fig. 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008253457 A
- US 2008198934 A
- US 2001026590 A
- US 2006256852 A
- US 2008043842 A

**Littérature non-brevet citée dans la description**

- **G.J. SULLIVAN ; T.WIEGAND.** Rate-distortion optimization for video compression. *IEEE Signal Proc. Mag.,* 1998, 74-90